# EUROPEAN PATENT SPECIFICATION

(11) **EP 1 081 517 B1**
(45) Date of publication and mention of the grant of the patent: **20.07.2005**
(21) Application number: 99913712.8
(22) Date of filing: 19.04.1999
(51) Int. Cl.: G02B 6/40, G02B 6/38

(54) **FERRULE FOR OPTICAL CONNECTOR, METHOD OF PRODUCING THE SAME, AND OPTICAL CONNECTOR COMPRISING THE SAME**
STECKERSTIFT FÜR OPTISCHEN STECKER, METHODE ZU SEINER HERSTELLUNG UND OPTISCHER STECKER MIT EINEM SOLCHEN STECKERSTIFT
FERRULE POUR CONNECTEUR OPTIQUE, PROCEDE DE PRODUCTION ET CONNECTEUR COMPRENANT CETTE FERRULE

(30) Priority: 20.04.1998 JP 10947398
(43) Date of publication of application: 07.03.2001
(73) Proprietor: Sumitomo Electric Industries, Ltd., Osaka-shi, Osaka 541-0041 (JP)
(72) Inventor: KATSURA, Hiroshi, Sumitomo Elec. Ind., Ltd., Yokohama-shi, Kanagawa 244-8588 (JP); SAKURAI, Wataru, Sumitomo Elec. Ind., Ltd., Yokohama-shi, Kanagawa 244-8588 (JP); KAKII, Toshiaki, Sumitomo Elec. Ind., Ltd., Yokohama-shi, Kanagawa 244-8588 (JP); SHIBATA, Masahiro, Sumitomo Elec. Ind., Ltd., Yokohama-shi, Kanagawa 244-8588 (JP)
(74) Representative: HOFFMANN - EITLE
(86) International application number: PCT/JP1999/002068
(87) International publication number: WO 1999/054770

(56) References cited:
- EP-A- 0 241 724
- EP-A- 0 607 949
- EP-A- 0 730 175
- EP-A- 0 852 339
- GB-A- 2 276 583
- JP-A- 1 035 509
- JP-A- 2 146 510
- JP-A- 7 159 652
- JP-A- 9 068 627
- JP-A- 63 055 507
- US-A- 5 602 951
- PATENT ABSTRACTS OF JAPAN vol. 013, no. 222 (P-876), 24 May 1989 (1989-05-24) -& JP 01 035509 A (SUMITOMO ELECTRIC IND LTD), 6 February 1989 (1989-02-06)

## Description

### Technical Field

The present invention relates to an optical connector ferrule used to connect end faces of optical fibers, and an optical connector using the connector ferrule.

### Background Art

EP 0 730 175 A2 discloses a fiber optic connector.

GB 2 276 583 discloses a method for molding fiber optic connector ferrules.

JP 01035509 discloses a guide-pin hole assembly for an optical connector.

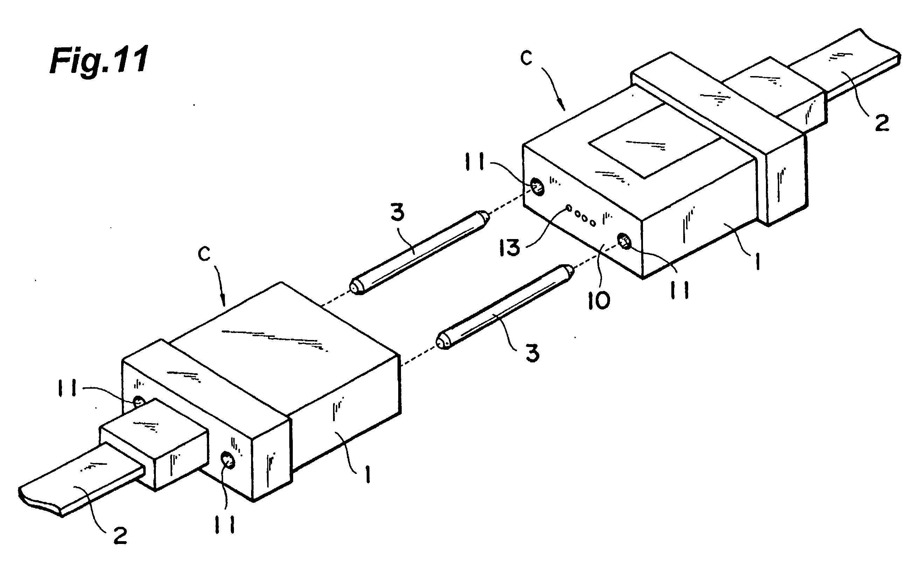

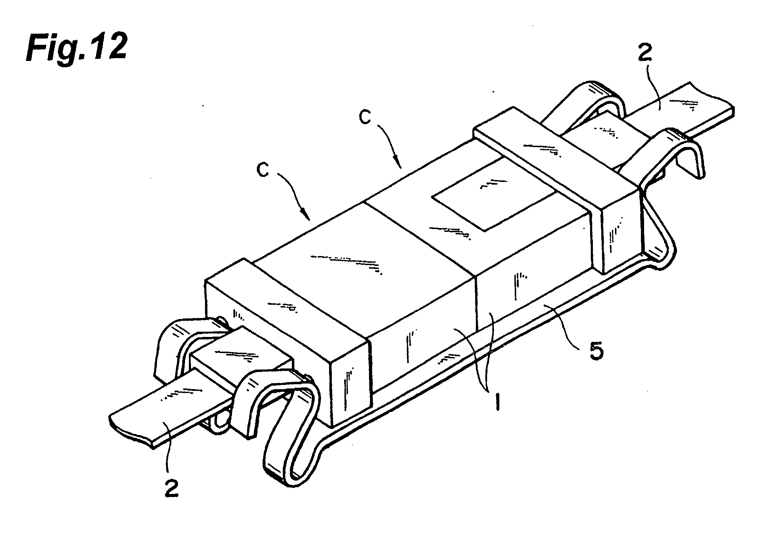

As a connector used for a connection of a plurality of optical fibers, an optical connector of the type standardized by JIS C 5981 is generally known. An optical connector of this type is manufactured by using a mold like the one disclosed in Japanese Patent Laid-Open No. 8-179161. As shown in Figs. 11 and 12, an optical connector C is of a type designed to position and fix optical fibers with a connector ferrule 1. As shown in Fig. 11, this connector ferrule 1 is mounted on the end portion of a fiber optic ribbon cable 2. A pair of guide-pin holes 11 are formed in a mating end face 10 to be connected with another optical connector C. Guide pins 3 for positioning and fixing the mating end faces of the two connectors are inserted in the guide-pin holes 11. These guide-pin holes 11 extend through the connector ferrule 1 from the mating end face 10 to the reverse end. The end portions of fiber positioning holes 13 for positioning the optical fibers in the fiber optic ribbon cable 2 are also formed in the mating end face 10. The optical connectors C described above are mutually positioned by inserting the common guide pins 3 into the guide-pin holes 11 and coupled to each other, as shown in Fig. 12. The coupled state of the two connectors is held by a clamp spring 5.

Optical connectors of this type are used for optical connection in a place where an optical communication line needs to be branched or switched. To switch connection, optical connectors must be detached/attached. It is required for such optical connectors that connection loss variations be small even if the connectors are repeatedly detached/attached.

Embodiments of the present invention outlined below with reference to the accompanying drawings provide an optical connector which causes little connection loss variation even with repetitive detachment/attachment, and a connector ferrule for the optical connector. A method of manufacturing the optical connector ferrule is also disclosed.

According to the present invention there is provided an optical connector ferrule used in an optical connector to position and fix at least one optical fiber for optical connection, comprising:
a ferrule body made from a resin by molding and having a mating end face, at least one fiber receiving hole and a pair of guide-pin holes, each of them extending from said mating end face toward the other end of said ferrule body,
wherein the diameter of each of said guide-pin holes gradually increases toward said mating end face at a predetermined portion; and
said predetermined portions of the guide-pin holes are located within a range of 0.1 mm to 1.0 mm from said mating end face, and wherein the predetermined portions are integrally-molded with the end face, and
characterized in that:
each of the guide-pin holes has a cylindrical region between said mating end face and said predetermined portion.

According to the optical connector using this connector ferrule, when a guide pin is to be inserted into the guide-pin hole from the mating end side, since the diameter of the guide-pin hole gradually increases toward the mating end, the guide pin can be easily and smoothly inserted into the guide-pin hole. This can suppress damage to the connector ferrule or wear thereof by the guide pin, and hence can realize an optical connector which can maintain good transmission characteristics even if the connector is repeatedly detached/attached.

Each guide-pin hole has a cylindrical region between said mating end face and said predetermined portion. The cylindrical region causes a desired enlarged region to be reliably formed in a resin molding process which is the most common method for manufacturing the connector ferrule. Each extending length of the cylindrical region may be from 2µm to 50µm. The predetermined portion of each guide-pin hole may have a conical frustum having a apical angle (α) from 30° to 70°.

When an enlarged region (predetermined portion) is formed in this manner, the formation of the enlarged region itself is facilitated, and a guide pin can be easily and reliably inserted into a guide-pin hole. This can reliably suppress damage to the connector ferrule or wear thereof by the guide pins, and easily realize an optical connector which can always maintain good transmission characteristics even with repetitive detachment/attachment.

An optical connector according to the present invention is an optical connector using these optical connector ferrules. This optical connector comprises a pair of optical fiber sets each including an equal number of optical fibers, said number being at least one; a pair of optical connector ferrules each defined in claim 1, each ferrule positioning and fixing one of the respective optical fiber sets; and a pair of guide pins which are inserted into the guide-pin holes in said optical connector ferrules to butt-joint said mating end faces of said optical connector ferrules to each other.

According to this optical connector, since the guide pins can be easily and smoothly inserted, damage to the connector ferrules or wear thereof by the guide pins can be suppressed, and good transmission characteristics can always be maintained even with repetitive detachment/attachment.

### Brief Description of the Drawings

Fig. 1 is a perspective view showing a first embodiment of an optical connector;
Fig. 2 is a sectional view taken along a line II - II in Fig. 1;
Figs. 3A and 4A are views for explaining insertion of a guide pin of a conventional optical connector, and Figs. 3B and 4B are views for explaining insertion of a guide pin of the optical connector of the first embodiment;
Fig. 5A is a view for explaining how the position of a guide pin is offset from a guide-pin hole in the conventional optical connector, and Fig. 5B is a view for explaining how the position of a guide pin is offset from a guide-pin hole in the optical connector of the first embodiment;
Fig. 6A is a view for explaining how a mating end of the conventional optical connector is cleaned, and Fig. 6B is a view for explaining how a mating end of the optical connector of the first embodiment is cleaned;
Fig. 7A to 7C are sectional views showing the enlarged regions of guide-pin holes which are located near mating end faces;
Fig. 8 is an exploded perspective view showing a mold for molding the optical connector ferrule shown in Fig. 1;
Fig. 9 is a sectional view taken along a line IX -IX in Fig. 8;
Fig. 10 is a perspective view showing a second embodiment of an optical connector; and
Figs. 11 and 12 are perspective views showing conventional optical connectors, in which Fig. 11 shows the connectors when they are not connected to each other, and Fig. 12 shows the connectors when they are connected to each other.

### Best Mode for Carrying Out the Invention

The preferred embodiments are described in detail below with reference to the accompanying drawings. To facilitate the comprehension of the explanation, the same reference numerals denote the same parts, where possible, throughout the drawings, and a repeated explanation will be omitted.

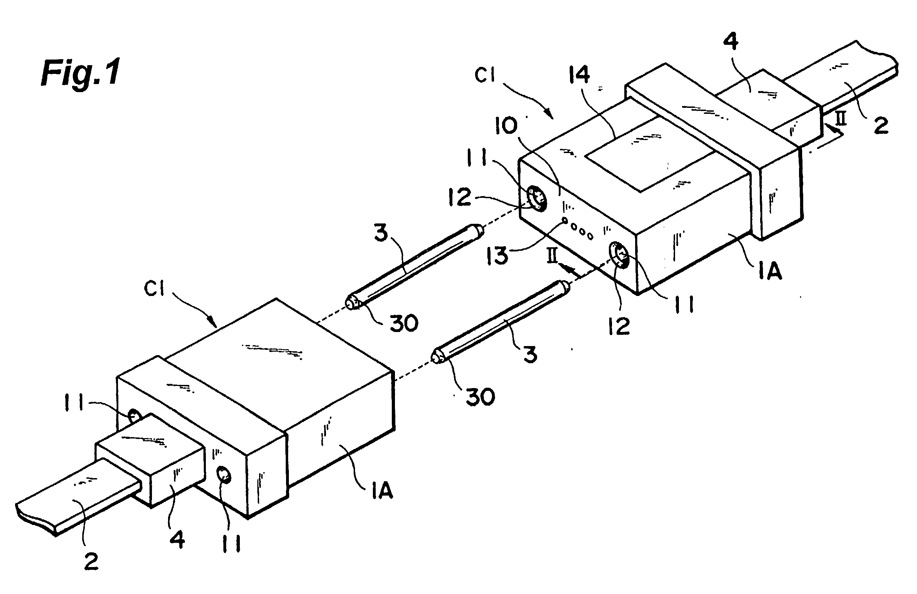

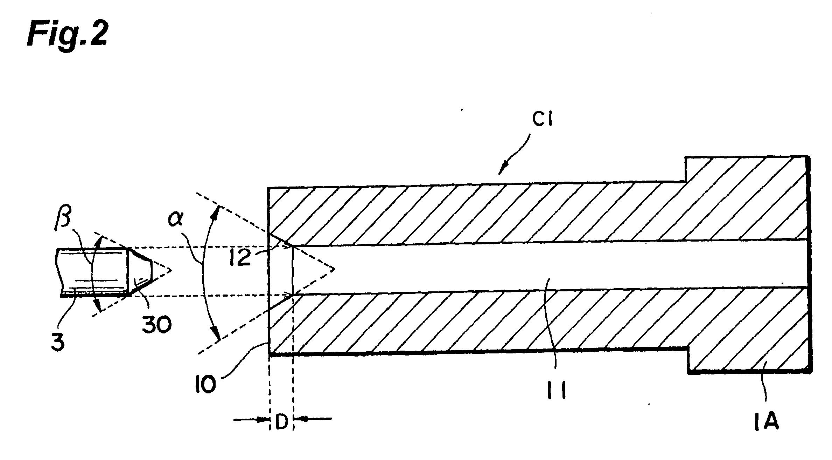

Fig. 1 is an exploded perspective view of the first embodiment of an optical connector. Fig. 2 is a sectional view taken along a line II - II in Fig. 1.

An optical connector C1 is formed by fixing the distal end of a fiber optic ribbon cable 2 to a connector ferrule 1A. The connector ferrule 1A has a pair of guide-pin holes 11 in a mating end face 10 to be butt-joined to another optical connector C1. Positioning guide pins 3 are inserted in these guide-pin holes 11. The opening end portion of each guide-pin hole 11 is chamfered in a tapered shape to form an enlarged region 12 whose inner diameter gradually increases toward the mating end-side. Note that these guide-pin holes 11 are formed through the connector ferrule 1A from the mating end face 10 to the reverse end.

The opening end portions of fiber positioning holes 13 for positioning and fixing the respective optical fibers of the fiber optic ribbon cable 2 are arranged at predetermined intervals between the two guide-pin holes 11 in the mating end face 10 of the connector ferrule 1A. An adhesive filling opening portion 14 is formed in the upper surface of the connector ferrule 1A. The optical fibers are arranged respectively in the fiber positioning holes 13, and an adhesive is charged through the opening portion 14 and set. With this process, the arranged optical fibers, the fiber optic ribbon cable 2, and a boot 4 covering the fiber optic ribbon cable 2 are fixed to the connector ferrule 1A.

As shown in Fig. 2, the inner diameter of the enlarged region 12 formed at the opening end portion of the guide-pin hole 11 gradually increases toward the mating end face 10. The inner wall of the enlarged region 12 defines a truncated cone shape. The apical angle of this truncated cone shape, i.e., a chamfering angle α, is from 30° to 70°. A distance D from the mating end face 10 to the end face of the deepest portion of the enlarged region 12 is from 0.1 mm to 1.0 mm.

If the chamfering angle α is less than 30°, the difference between the maximum inner diameter (the inner diameter of the opening end portion) and the maximum diameter of the guide pin 3 becomes small. As a consequence, the end portion of the guide pin 3 is likely to come into contact with the mating end face 10. In this case, the guide pin 3 is likely to damage the periphery of the opening end portion of the enlarged region 12 on the mating end face 10.

If the chamfering angle α exceeds 70°, the difference between the maximum diameter of the enlarged region 12 and the maximum diameter of the guide pin 3 becomes large. As a consequence, the guide pin 3 is likely to come into contact with a portion near the minimum-diameter portion of the enlarged region 12. In this case, the guide pin 3 is likely to damage the portion near the minimum-diameter portion of the enlarged region 12. In addition, it is difficult to guide the guide pin 3 into the guide-pin hole 11. If the chamfering angle α exceeds 70°, since the maximum-diameter portion of the enlarged region 12 becomes excessively large, the enlarged region 12 interferes with the fiber positioning holes 13 or the size of the connector ferrule 1A itself must be increased. That is, this arrangement is not practical.

The chamfering angle α is preferably set to 35° to 55°, in particular, within the above range, to simultaneously satisfy the two requirements, i.e., preventing the above damage due to contact with the guide pin 3 and efficiently inserting the guide pin 3 into the guide-pin hole 11. If the end portion of the guide pin 3 to be used has a tapered portion 30, the chamfering angle α is more preferably set to be within the above range and equal to or larger than a tapering angle β of the tapered portion 30.

If the formation range D from the mating end face 10 of the enlarged region 12 is less than 0.1 mm, the end portion of the guide pin 3 cannot be satisfactorily guided, and a portion near the enlarged region 12 is likely to be damaged by contact with the guide pin 3. If the formation range D exceeds 1.0 mm, since the holding force for the guide pin 3 decreases on the mating end face 10 side, the connection loss characteristics may deteriorate. In addition, if the formation range D exceeds 1.0 mm, since the maximum-diameter portion of the enlarged region 12 becomes excessively large, the enlarged region 12 interferes with the fiber positioning holes 13 or the size of the connector ferrule 1A itself must be increased. That is, this arrangement is not practical.

Table 1 shows the test results obtained by testing connection loss variations before and after guide pins were inserted/removed, 200 times each, in/from optical connector ferrules having different chamfering angles α and different formation ranges D.

| Shape of Chamfered Portion | | Connection Loss Variation (dB) |
|---|---|---|
| Chamfering Angle α (°) | Formation Range D(mm) | |
| 20 | | 0.25 |
| 30 | | 0.2 |
| 40 | | 0.15 |
| 50 | 0.3 | 0.15 |
| 60 | | 0.15 |
| 70 | | 0.2 |
| 80 | | 0.3 |
| 60 | 0.05 | 0.3 |
| | 0.15 | 0.2 |
| | 0.3 | 0.15 |
| | 0.7 | 0.15 |

Table 1 Test Results on Connection Variations As is obvious from this table, when the chamfering angle α is within the range of 30° to 70°, or the formation range D is within the range of 0.1 mm to 1.0 mm, the connection loss variations are small (i.e., no deterioration in connection loss characteristics occurs, and good transmission characteristics can be stably obtained).

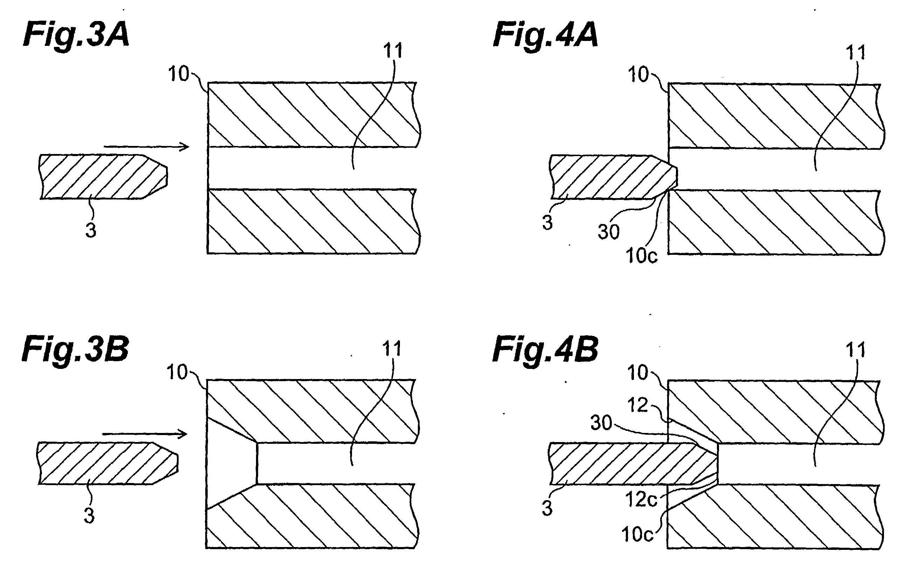

Insertion of the guide pin 3 into the guide-pin hole 11 in the optical connector according to Fig. 1 will be described below in comparison with the conventional optical connector in Fig. 11 with reference to Figs. 3A, 3B, 4A, and 4B. Figs. 3A and 4A are views for explaining insertion of the guide pin 3 into the guide-pin hole 11 in the conventional optical connector. Figs. 3B and 4B are views for explaining insertion of the guide pin 3 into the guide-pin hole in the optical connector.

As shown in Fig. 3A, the diameter of the guide-pin hole 11 of the conventional optical connector remains unchanged up to the opening end portion of the mating end face 10. If, therefore, the position of the guide pin 3 is offset from the guide-pin hole 11, the guide pin 3 is difficult to insert. Even if the guide pin 3 can be inserted, an edge 10c of the opening end portion is likely to chip.

In the case of an optical connector 1C which uses the above connector ferrule 1A, the guide pin 3 can be smoothly guided from the enlarged region 12 into the guide-pin hole 11, as shown in Fig. 3B. In addition, even if the position of the guide pin 3 is offset from the guide-pin hole 11, an edge 10c of the opening end portion or an edge 12c of the deepest portion of the enlarged region 12 is not likely to chip, as shown in Fig. 4B. This can prevent the guide pin 3 from damaging or wearing the connector ferrule 1A, and hence good transmission characteristics can be obtained. In addition, since the guide pin 3 can be smoothly guided into the guide-pin hole 11 owing to the enlarged region 12, wear of the inner surface of the guide-pin hole 11 due to the guide pin 3 can be suppressed. Even if, therefore, the guide pin 3 is repeatedly inserted and removed, almost no connection loss variation occurs.

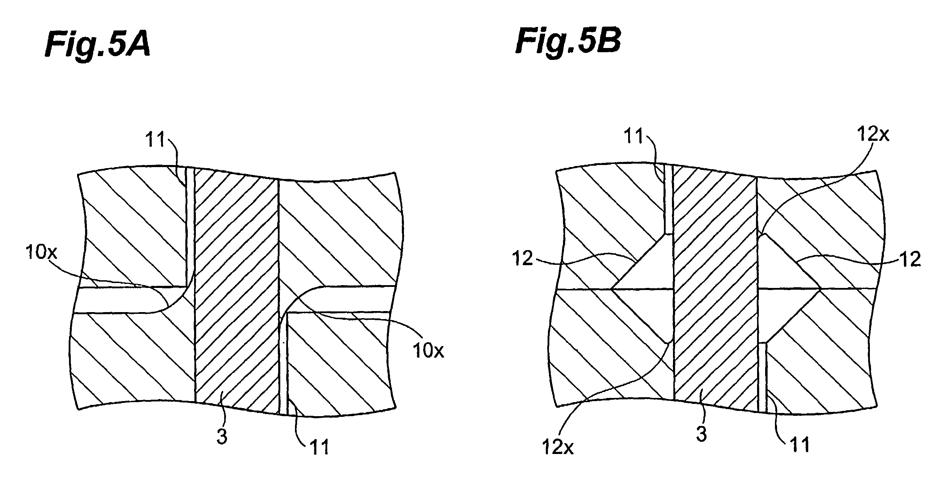

When the connector is repeatedly attached/detached, the guide pin 3 is repeatedly inserted/removed in/from the guide-pin hole 11. In the case of the conventional optical connector, if the position of the guide-pin hole 11 in the optical connector is slightly offset, the guide pin 3 is pressed against the side surface of the guide-pin hole 11, resulting in deformation of the ferrule body. As a result, a burr 10x is formed on the edge of the opening end of each mating end, as shown in Fig. 5A. This burr 10x makes it more difficult to re-insert the guide pin 3 into the guide-pin hole 11. Furthermore, since the burrs protrude from the mating end faces 10, a gap is produced between the mating end faces 10. This may hinder reliable optical connection.

In contrast to this, if the position of the guide-pin hole 11 in the optical connector according to the present invention is offset, a burr 12x is formed on the edge of the deepest portion (minimum-diameter portion) of each enlarged region 12, as shown in Fig. 5B. This burr 12x is smaller than the burr 10x in the prior art, and has little influence on re-insertion of the guide pin 3. In addition, the burrs do not protrude to the mating end faces 10, and hence have no influence on contact between the mating end faces 10 of the optical connectors. This allows reliable optical connection.

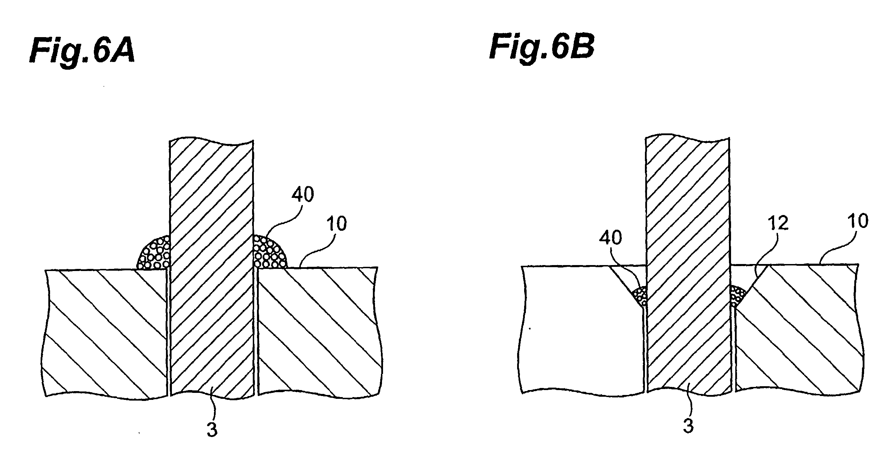

Assume that each optical connector 1C is to be disconnected to clean the mating end face 10. In the case of the conventional optical connector, if the guide pin 3 is kept inserted in the guide-pin hole 11, grime 40 on the mating end face 10 stays around the guide pin 3 and cannot be completely removed, as shown in Fig. 6A. This produces a gap between the mating end faces 10 when they are coupled to each other again, and hinders reliable optical connection. For this reason, the end faces must be cleaned after the guide pins 3 are removed.

In the case of the optical connector shown in Fig. 6B, since no grime 40 stays on the mating end face 10, there is no influence of grime on contact between the mating end faces 10 of the optical connectors, and reliable optical connection can be performed. This improves operability in cleaning. In addition, since the guide pins 3 need not be frequently inserted/removed, problems due to insertion/removal of the guide pins 3 can be prevented.

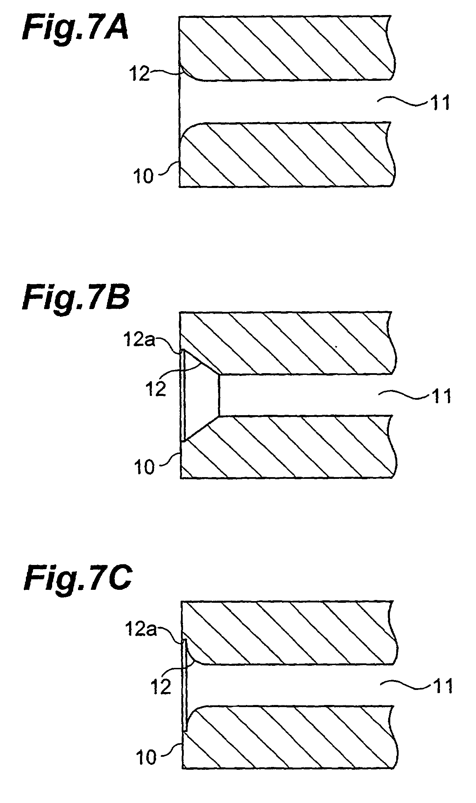

Figs. 7A to 7C are sectional views each showing a modification of the enlarged region 12. According to the modification shown in Fig. 7A, the inner wall of the guide-pin hole 11 is chamfered in a curved shape on the opening end portion side. In this state, since contact between the guide pin and the inner wall surface can be further suppressed as compared with the guide-pin hole having the tapered enlarged region, damage to the connector ferrule can be prevented more effectively.

Figs. 7B and 7C respectively show modifications of the embodiments shown in Figs. 2 and 7A. Each modification consists in that a cylindrical region 12a having almost the same inner diameter as that of the enlarged region 12 is formed on the mating end face 10 side. This cylindrical region 12a is preferably formed to reliably form the enlarged region 12 in the guide-pin hole 11 on the mating end face 10 side.

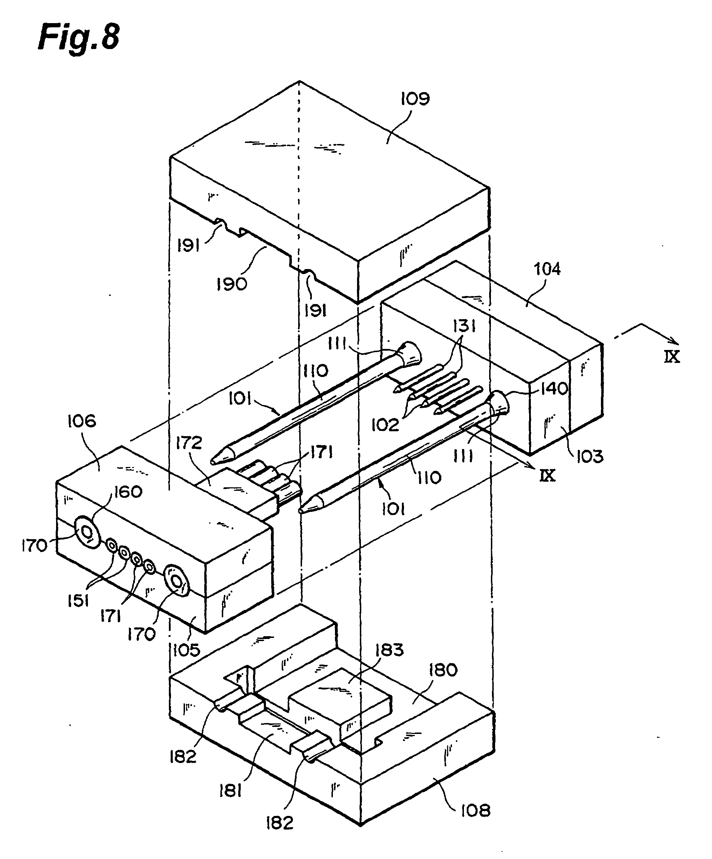

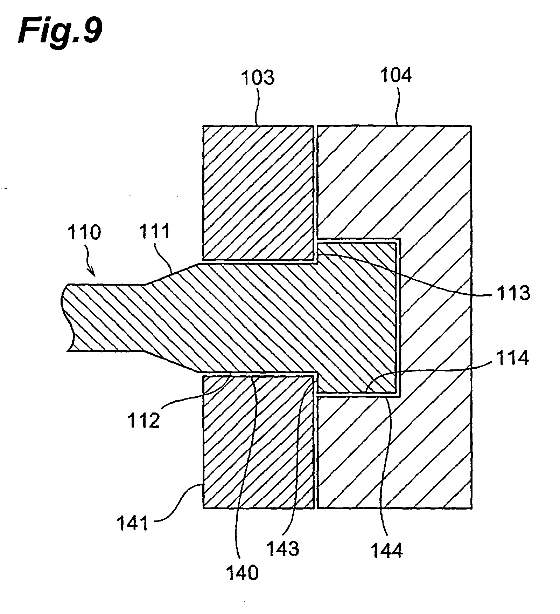

A manufacturing process for this optical connector ferrule will be described next with reference to Fig. 8. Fig. 8 is an exploded perspective view of a mold used to mold the connector ferrule 1A of the optical connector 1C in Fig. 1. Fig. 9 is a sectional view taken along a line IX - IX in Fig. 8.

This mold is made up of a pair of lower and upper mold parts 108 and 109. Between these mold parts 108 and 109, a pair of guide-pin-hole pins 101 and fiber-hole pins 102 are arranged so as to slide near these mold parts 108 and 109. Each of the pair of guide-pin-hole pins 101 has a columnar portion 110 having almost the same diameter as the diameter of the guide-pin hole 11 in the molded connector ferrule 1A, and a truncated cone portion 111 formed on the proximal end side of the columnar portion 110 to have a gradually increasing diameter. As shown in Fig. 9, a columnar portion 112 having a uniform diameter is further formed on the proximal end side of the truncated cone portion 111, and a flange portion 114 having an outer diameter larger than that of the columnar portion 112 is also formed on the proximal end side of the columnar portion 112.

The four fiber-hole pins 102 each having almost the same diameter as the diameter of each of fiber positioning holes 131 in the molded connector ferrule 1A are arranged between the pair of guide-pin-hole pins 101. Each fiber-hole pin 102 has a flange portion like the guide-pin-hole pin 101. The proximal end sides of these pins 101 and 102 are respectively inserted in hole portions 140 and the hole portions 131 formed in a first holding member 103 and accurately positioned and fixed.

More specifically, the proximal end portions of the respective pins 101 and 102 are inserted into the holes 140 and 131, which are formed through the first holding member 103 at predetermined intervals, up to the end portions. The diameter of the hole 140 is nearly equal to the diameter of the columnar portion 112 of the guide-pin-hole pin 101. The diameter of the hole 131 is nearly equal to the diameter of the columnar portion of the fiber-hole pin 102. The collar portions formed on the end portions of the pins 101 and 102 are clamped between a rear end face 143 of the first holding member 103 and a recess 144 formed in the front end face of a second holding member 104, thereby positioning and fixing the respective pins.

In this case, it is preferable that a portion of the guide-pin-hole pin 101 which has the maximum diameter on the proximal end portion side, i.e., a boundary portion with respect to the columnar portion 112, slightly protrude from a holding surface position corresponding to a front end face 141 of the first holding member 103. This is because, when the maximum-diameter portion slightly protrudes from the front end face 141, the guide-pin hole 11 in the formed connector ferrule has the shape shown in Fig. 7B, which allows the enlarged region 12 to be reliably formed. This protrusion amount is preferably set to 2 µm to 50 µm in consideration of an error in molding. If a margin of 2 µm is set in consideration of an actual mounting error and the like, the enlarged region 12 can be reliably formed in the formed connector ferrule. If, however, the protrusion amount exceeds 50 µm, the cylindrical region becomes excessively long. This poses a problem from the viewpoint of molding.

Cylindrical bodies 170 and 171 for bearing the distal ends of the guide-pin-hole pins 101 and fiber-hole pins 102 are arranged to slide free at positions corresponding to the pins 101 and 102. The pair of first cylindrical bodies 170 for bearing the distal ends of the guide-pin-hole pins 101 are fixed by being clamped between a third holding member 105 and fourth holding member 106. The inner diameter of the first cylindrical body 170 is nearly equal to the diameter of the columnar portion 110 of the guide-pin-hole pin 101. The first cylindrical body 170 holds the inserted columnar portion 110 and positions it. Each first cylindrical body 170 itself is accurately positioned and fixed in a cylinder 160 formed by combining semicircular grooves formed in the opposing surfaces of the third holding member 105 and fourth holding member 106.

The four second cylindrical bodies 171 for bearing the distal ends of the fiber-hole pins 102 are arranged between the pair of first cylindrical bodies 170. These second cylindrical bodies 171 are also fixed by being clamped between the third holding member 105 and fourth holding member 106. The second cylindrical bodies 171 protrude from the third holding member 105 and fourth holding member 106 toward the first holding member 103 and second holding member 104. The middle portions of the second cylindrical bodies 171 extend through a rectangular portion 172.

The inner diameter of the second cylindrical body 171 is nearly equal to the diameter of the fiber-hole pin 102. The second cylindrical body 171 holds the inserted fiber-hole pin 102 and positions it. Like each first cylindrical body 171, each second cylindrical body 171 is accurately positioned and fixed in a cylinder 151 formed by combining semicircular grooves formed in the opposing surfaces of the third holding member 105 and fourth holding member 106.

Recesses 180 (not shown on the upper mold part 109 side) for forming the connector ferrule 1A are formed in the inner surfaces of the lower mold part 108 and upper mold part 109. A projection 183 for forming the opening portion 14 is formed in the recess 180 of the lower mold part 108. Rectangular notched portions 181 and 190 for allowing the rectangular portion 172 to be inserted through and semicircular notched portions 182 and 191 for bearing columnar portions 110 of the guide-pin-hole pins 101 are formed in the lower mold part 108 and upper mold part 109 on the side where the third holding member 105 and fourth holding member 106 are located.

When the connector ferrule 1A is to be molded by using the above mold, the lower mold part 108 and upper mold part 109 are closed, and the guide-pin-hole pins 101, the inserted fiber-hole pins 102 and the second cylindrical bodies 171 are slid and disposed into the space between the mold parts 108 and 109. The distal ends of the guide-pin-hole pins 101 are inserted into the first cylindrical bodies 170 through the circular holes formed by the semicircular notched portions 182 and 191, whereas the distal ends of the fiber-hole pins 102 are inserted into the second cylindrical bodies 171 and fixed. The rectangular portion 172 is guided into the mold parts 108 and 109 through the rectangular notched portions 181 and 190, and the lower surface of the rectangular portion 172 comes into contact with the upper surface of the projection 183.

The mold parts 108 and 109 are then filled with a molten resin. The resin is cooled and set. The guide-pin holes 11 are formed by the columnar portions 110, and the enlarged regions 12 are formed by the truncated cone portions 111. The fiber positioning holes 13 are formed by the fiber-hole pins 102, and the opening portion 14 are formed by the projection 183 and rectangular portion 172. When the resin in the mold parts 108 and 109 are set, the members 103 to 106 are slid laterally, thereby removing the guide-pin-hole pin 101 and the like from the mold parts 108 and 109. The lower mold part 108 and upper mold part 109 are then opened to extract the molded connector ferrule 1A.

When the guide-pin-hole pins 101 are to be pulled out, the columnar portions 110 are only pulled out toward the truncated cone portion 111 side to prevent the formation of so-called undercut portions. For this reason, the enlarged regions 12 may be formed in the molded connector ferrule 1A by using a slide core structure for forming the guide-pin holes 11 and fiber positioning holes 13. That is, there is no need to newly form a complicated slide core structure to form the enlarged regions 12.

According to the above manufacturing method, the enlarged regions 12 can be efficiently and accurately formed on the opening end portions of the guide-pin holes 11 in the connector ferrule 1A. According to the molded connector ferrule 1A, as described above, the optical connector C1 can be realized, which can suppress damage to the connector ferrule 1A and wear thereof by the guide pins 3, has good transmission characteristics, and is almost free from connection loss variations even with repetitive attachment/detachment.

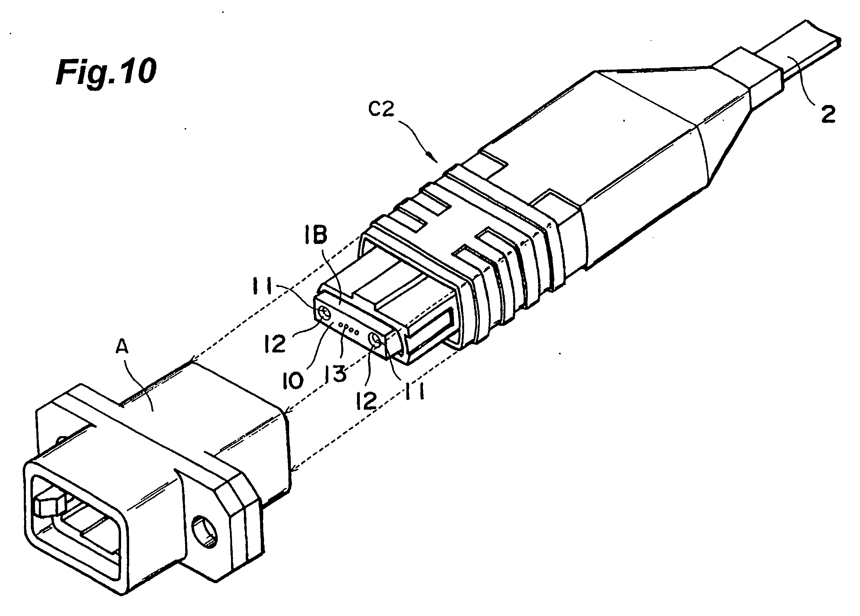

A second optical connector will be described next with reference to Fig. 10.

An optical connector C2 in Fig. 10 is a so-called push-on type MPO connector. A pair of optical connectors C2 can be connected to each other by inserting them into an adapter A in opposite directions. In this case, connector ferrules 1B incorporated in the distal end portions of the optical connectors C2 are mutually positioned with guide pins (not shown in Fig. 10) and guide-pin holes 11, as in the case of the connector ferrules 1A in Fig. 1.

In this case as well, the formation of enlarged regions 12 allows the connector ferrules 1B to be smoothly positioned while preventing the connector ferrules 1B from being damaged or worn. In the case of push-on type optical connectors like the optical connectors C2, since guide pins 3 cannot be seen when they are inserted into the guide-pin holes 11, the guide pins 3 are likely to come into contact with mating end faces 10. This tends to damage or wear the connector ferrules 1B. For this reason, the formation of the enlarged regions 12 as shown in Fig. 10 is a very effective means for preventing the connector ferrules 1B from being damaged or worn in the push-on type optical connectors.

Note that the optical connector of the present invention is not limited to the above embodiments. For example, the optical connectors may be MT type connectors, MF type connectors, or the like instead of MPO type connectors.

From the invention thus described, it will be obvious that the invention may be varied within the scope as defined in the following claims.

### Industrial Applicability

The present invention can be applicable for various type of optical connector, such as MPO type, MT type or the like.

## Claims

1. An optical connector ferrule (1A, 1B) used in an optical connector (C1, C2) to position and fix at least one optical fiber for optical connection, comprising:
a ferrule body made from a resin by molding and having a mating end face (10), at least one fiber receiving hole (13) and a pair of guide-pin holes (11, 11), each of them extending from said mating end face toward the other end of said ferrule body,
wherein the diameter of each of said guide-pin holes gradually increases toward said mating end face at a predetermined portion (12); and
wherein said predetermined portions of the guide-pin holes are located within a range of 0.1 mm to 1.0 mm from said mating end face, and wherein the predetermined portions are integrally-molded with the end face,
**characterized in that**:
each of the guide-pin holes has a cylindrical region between said mating end face and said predetermined portion.

2. A connector ferrule according to claim 1, wherein the extending length of each of said cylindrical regions is from 2µm to 50µm.

3. A connector ferrule according to claim 1 or 2, wherein the wall of said predetermined portion of each guide-pin hole defines a conical frustum having a apical angle (α) from 30° to 70°.

4. A connector ferrule according to claim 1 or 2, wherein a wall surface of said predetermined portion of the guide-pin hole is formed by a convex surface curved from the mating face end of the predetermined portion toward an inside of the guide-pin hole.

5. An optical connector (C1, C2) comprising:
a pair of optical fiber sets (2, 2) each including an equal number of optical fibers, said number being at least one;
a pair of optical connector ferrules each defined in claim 1, each ferrule positioning and fixing one of the respective optical fiber sets; and
a pair of guide pins (3, 3) which are inserted into the guide-pin holes (11, 11) in said optical connector ferrules to butt-joint said mating end faces of said optical connector ferrules to each other.

## Patentansprüche

1. In einem optischen Steckverbinder (C1, C2) verwendete optische Steckerhülse (1A, 1B) zur Positionierung und Befestigung mindestens einer optischen Faser für eine optische Verbindung, umfassend:
einen Hülsenkörper, der durch Spritzguss aus einem Harz hergestellt ist und eine Kontaktendfläche (10) aufweist, mindestens ein die Faser aufnehmendes Loch (13) und ein Paar von Führungsstiftlöchern (11, 11), wobei sich jedes von ihnen von der Kontaktendfläche zum anderen Ende des Hülsenkörpers erstreckt,
wobei der Durchmesser jedes der Führungsstiftlöcher allmählich zur Kontaktendfläche an einem vorbestimmten Abschnitt (12) zunimmt; und
wobei sich die vorbestimmten Abschnitte der Führungsstiftlöcher innerhalb eines Bereichs von 0,1 mm bis 1,0 mm von der Kontaktendfläche befinden, und wobei die vorbestimmten Abschnitte ganzheitlich mit der Endfläche geformt sind,
**dadurch gekennzeichnet, dass**:
jedes der Führungsstiftlöcher einen zylindrischen Bereich zwischen der Kontaktendfläche und dem vorbestimmten Abschnitt aufweist.

2. Steckerhülse nach Anspruch 1, wobei die sich erstreckende Länge jedes der zylindrischen Bereiche von 2 µm bis 50 µm beträgt.

3. Steckerhülse nach Anspruch 1 oder 2, wobei die Wand des vorbestimmten Abschnitts jedes Führungsstiftloches einen Kegelstumpf mit einem Öffnungswinkel (α) von 30° bis 70° definiert.

4. Steckerhülse nach Anspruch 1 oder 2, wobei eine Wandfläche des vorbestimmten Abschnitts des Führungsstiftloches von einer konvexen Oberfläche gebildet wird, die von dem Kontaktflächenende des vorbestimmten Abschnitts zu einer Innenseite des Führungsstiftlochs gebogen ist.

5. Optischer Steckverbinder (C1, C2) umfassend:
ein Paar von optischen Fasersätzen (2, 2), wobei jeder eine gleiche Zahl von optischen Fasern beinhaltet, wobei die Zahl mindestens eins ist;
ein Paar von optischen Steckerhülsen, jede in Anspruch 1 definiert, wobei jede Hülse einen der jeweiligen optischen Fasersätze positioniert und befestigt; und
ein Paar von Führungsstiften (3, 3), die in die Führungsstiftlöcher (11, 11) in den optischen Steckerhülsen eingesetzt werden, um die Kontaktendflächen der optischen Steckerhülsen miteinander anliegend zu verbinden.

## Revendications

1. Embout (1A, 1B) de connecteur optique, utilisé dans un connecteur optique (C1, C2) pour positionner et fixer au moins une fibre optique pour une connexion optique, comprenant:
un corps d'embout formé par moulage à partir d'une résine et possédant une face d'extrémité d'accouplement (10), au moins un trou (13) de réception d'une fibre et une paire de trous (11, 11) pour broches de guidage, chacun d'eux s'étendant à partir de la face d'extrémité d'accouplement en direction de l'autre extrémité dudit corps d'embout,
dans lequel le diamètre de chacun desdits trous pour broches de guidage augmente graduellement en direction de ladite face d'extrémité d'accouplement, dans une partie prédéterminée (12); et
dans lequel lesdites parties prédéterminées des trous pour broches de guidage sont situées dans une gamme de 0,1 mm à 1,0 mm à partir de ladite face d'extrémité d'accouplement, et dans lequel les parties prédéterminées sont moulées d'un seul tenant avec la face d'extrémité,
**caractérisé en ce que**:
chacun des trous de guidage possède une région cylindrique située entre ladite face d'extrémité d'accouplement et ladite partie prédéterminée.

2. Embout de connecteur selon la revendication 1, dans lequel la longueur sur laquelle s'étend chacune desdites régions cylindriques s'étend de 2 µm à 50 µm.

3. Embout de connecteur selon la revendication 1 ou 2, dans lequel la paroi de ladite partie prédéterminée de chaque trou de guidage de broche définit une partie tronconique possédant un angle au sommet (α) allant de 30° à 70°.

4. Embout de connecteur selon la revendication 1 ou 2, dans lequel une surface de paroi de ladite partie prédéterminée du trou pour broche de guidage est formée par une surface convexe incurvée à partir de la face d'extrémité d'accouplement de la partie prédéterminée en direction d'un espace intérieur du trou pour broche de guidage.

5. Connecteur optique (C1, C2) comprenant:
une paire d'ensembles (2, 2) de fibres optiques, comprenant un même nombre de fibres optiques, ledit nombre étant égal à au moins un;
une paire d'embouts de connecteurs optiques, dont chacun est défini dans la revendication 1, chaque embout positionnant et fixant l'un des ensembles respéctifs de fibres optiques; et
une paire de broches de guidage (3, 3) qui sont insérées dans les trous (11, 11) de guidage pour broches de guidage dans lesdits embouts de connecteurs optiques, pour réunir par aboutement entre elles lesdites faces d'extrémité d'accouplement desdits embouts de connecteurs optiques.
